**Europäisches Patentamt**

**European Patent Office**

**Office européen des brevets**

(19)

(11) Veröffentlichungsnummer: **0 046 517**
**B1**

(12) # EUROPÄISCHE PATENTSCHRIFT

(45) Veröffentlichungstag der Patentschrift:
**10.04.85**

(51) Int. Cl.⁴: **G 01 L 3/10**, G 01 L 3/00

(21) Anmeldenummer: **81105960.9**

(22) Anmeldetag: **29.07.81**

(54) Verfahren zur berührungslosen Messung statischer und dynamischer Drehmomente.

(30) Priorität: **25.08.80 DE 3031997**

(43) Veröffentlichungstag der Anmeldung:
**03.03.82 Patentblatt 82/9**

(45) Bekanntmachung des Hinweises auf die Patenterteilung:
**10.04.85 Patentblatt 85/15**

(84) Benannte Vertragsstaaten:
**AT CH LI SE**

(56) Entgegenhaltungen:
**DE - A - 2 335 249**
**DE - A - 2 922 256**
**DE - B - 1 201 582**
**DE - B - 1 648 334**

(73) Patentinhaber: **Licentia Patent-Verwaltungs-GmbH,**
**Theodor-Stern-Kai 1, D-6000 Frankfurt/Main 70 (DE)**

(72) Erfinder: **Winterhoff, Horst, Dipl.-Phys., Kiefernweg 8,**
**D-6072 Dreieich-Buchschlag (DE)**

(74) Vertreter: **Lertes, Kurt, Dr. et al, Licentia**
**Patent-Verwaltungs-GmbH Theodor-Stern-Kai 1,**
**D-6000 Frankfurt/M 70 (DE)**

## Beschreibung

Die Erfindung betrifft ein Verfahren zur berührungslosen Messung statischer und dynamischer Drehmomente, bei dem auf der Prüflingsoberfläche ein magnetisches Wechselfeld erzeugt und die Permeabilitätsänderung der Prüflingsoberfläche mittels eines Magnetjochs mit vier Polstücken (Jochsegmenten) erfasst wird.

Es sind magnetoelastische Drehmomentaufnehmer bekannt, bei denen eine Welle von drei mit Wicklungen versehenen elektromagnetischen Polringen umgeben ist, wobei die mittlere Wicklung mit Wechselstrom gespeist wird, während die beiden äusseren Polringe mit gegeneinander geschalteten Sekundärwicklungen versehen sind. Zur Messung wird die Nulläquipotentiallinie des vom mittleren Polring auf der Wellenoberfläche erzeugten magnetischen Wechselfeldes herangezogen. Bei Auftreten eines Drehmoments ändert sich die Permeabilität und damit auch die Nulläquipotentiallinie, und es ergibt sich eine magnetische Potentialdifferenz, so dass in den Sekundärwicklungen unterschiedliche Spannungen induziert werden. Bei diesen Drehmomentaufnehmern wird zwar bereits die durch das Drehmoment auftretende Permeabilitätsänderung zur Messung herangezogen, die Welle bzw. der Prüfling muss jedoch von drei besonders ausgebildeten Polringen mit Wicklungen umgeben sein (Handbuch der industriellen Messtechnik, Vulkan-Verlag, 1974).

Bei dem eingangs definierten Verfahren (DE-OS 2 335 249) wird eine Messeinrichtung verwendet, welche das Messobjekt, beispielsweise eine Welle, nicht mehr umschliesst, sondern dem Messobjekt beabstandet gegenübersteht. Es wird ein Magnetjoch mit vier Polstücken (Jochsegmenten) verwendet. Zur Erregung dient eine erste Spule aus zwei in Reihe geschalteten Wicklungen, die jeweils zwei hintereinanderliegende Jochsegmente umschliessen. Mit einer zweiten Spule, die in entsprechender Weise gebildet, aber zur ersten Spule um 90° versetzt angeordnet ist, wird das Messsignal erfasst. Dieser Aufbau führt zu einer kompakten Messeinrichtung. Es werden jedoch Messsignale erhalten, deren Weiterverarbeitung zu einer Anzeige nur mit erheblichem Aufwand möglich ist.

Aus der DE-OS 2 922 256 ist ferner eine Vorrichtung zur Messung einer mechanischen Spannung bekannt, bei der das verwendete Magnetjoch zwei Jochsegmente zur Erfassung des Messsignals und ein zentrales Jochsegment mit einer Erregerwicklung zur Erzeugung des magnetischen Wechselfeldes in der Oberfläche des Messobjekts aufweist. Die Empfindlichkeit der bekannten Vorrichtung ist jedoch für eine genaue Drehzahlmessung nicht ausreichend.

Der Erfindung liegt die Aufgabe zugrunde, das eingangs genannte Verfahren derart weiterzubilden, dass relativ hohe Messspannungen erhalten werden und damit nur ein geringer technischer Aufwand für die Signalverarbeitung erforderlich ist.

Diese Aufgabe wird gemäss der Erfindung dadurch gelöst, dass ein Magnetjoch verwendet wird, bei dem die Polstücke paarweise symmetrisch zum Prüfling angeordnet sind und bei dem jedem Polstück eine eigene Messwicklung zugeordnet ist und die Messwicklungen jeweils zweier diametral gegenüberliegender Polstücke bei gleichem Wicklungssinn in Reihe und die dadurch entstehenden Messwicklungspaare zu einer Messbrückenanordnung geschaltet sind, und dass der Prüfling durch das magnetische Wechselfeld bis in seinen Sättigungsbereich ummagnetisiert wird.

Vorteilhafte Ausgestaltungen und Weiterbildungen der Erfindung sind den Unteransprüchen zu entnehmen.

Das Messsystem weist einen sehr kleinen Quellwiderstand auf. Die induzierten Messspannungen liegen bei etwa 100 mV, so dass sich ein geringer technischer Aufwand für die Signalverarbeitung und Ansteuerung der Anzeige ergibt. Der im wesentlichen aus dem Magnetjoch bestehende Messkopf lässt sich mit sehr kleinen Abmessungen, beispielsweise einem Sondendurchmesser von 20 mm, herstellen.

Die Erfindung wird nachstehend anhand eines in der Zeichnung schematisch dargestellten Ausführungsbeispiels näher erläutert. Es zeigen:

Fig. 1 einen Ausschnitt einer Welle mit zwei dieser zugeordneten Messköpfen natürlicher Grösse zur Durchführung des erfindungsgemässen Verfahrens,

Fig. 2 eine vergrösserte Darstellung eines Messkopfes mit der Wicklungsausbildung und einem elektronischen Abgleichkreis,

Fig. 3 eine weitere Ausbildung eines sondenförmigen Messkopfes,

Fig. 4 einen Speisekreis für diesen Messkopf.

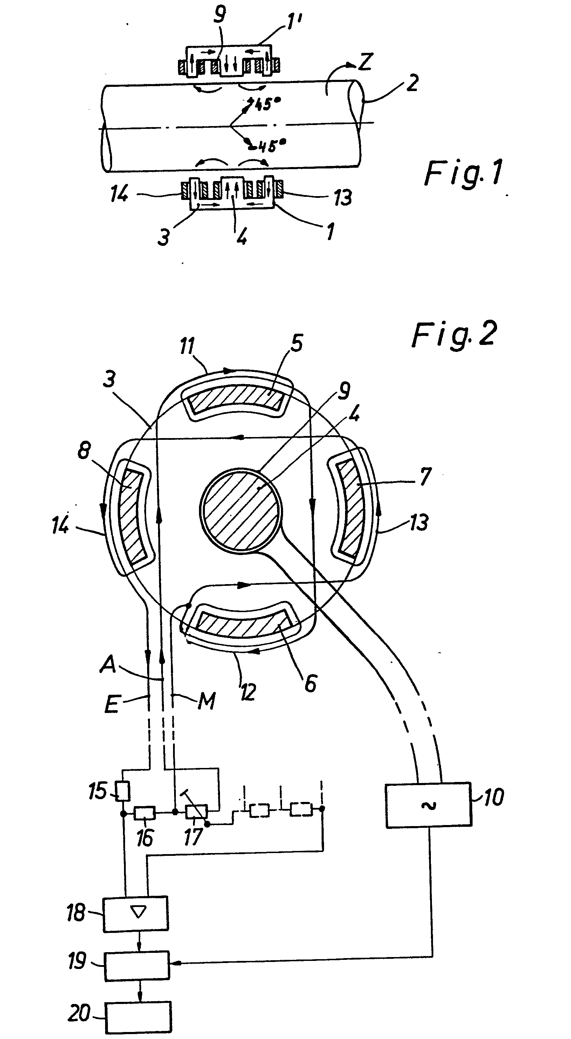

Wie aus Fig. 1 ersichtlich, stehen zwei um 180° gegeneinander versetzte Messköpfe 1, 1' einer Welle 2 in geringem Abstand gegenüber. Jeder Messkopf besteht aus einem weich-magnetischen Schalenkern 3 mit einem Innenkern 4 und vier Polstücken (Jochsegmenten) 5 bis 8.

Der Innenkern 4 ist mit einer Erregerwicklung 9 versehen, die von einer Wechselstromquelle 10 geeigneter Frequenz gespeist wird. Auf jeweils zwei gegenüberliegenden Segmenten 5, 6 bzw. 7, 8 sind in Reihe geschaltete Messwicklungen 11, 12 bzw. 13, 14 jeweils gleichen Wicklungssinnes angeordnet, wie durch die Pfeile angedeutet ist; das Messwicklungspaar 11, 12 ist gegen das Messwicklungspaar 13, 14 geschaltet. Anfang A, Ende E und der Verbindungspunkt M der Wicklungspaare 11, 12 und 13, 14 sind an einen aus Widerständen 15, 16, 17 bestehenden elektrischen Abgleichkreis geführt, welcher mit dem Eingang eines Verstärkers 18 verbunden ist, der ein Anzeigegerät 20 über einen phasenabhängigen Gleichrichter 19 ansteuert.

Wird die Erregerwicklung 9 aus der Quelle 10 mit Wechselstrom gespeist, so werden in der den Messköpfen 1, 1' zugewandten Oberfläche der Welle 2 Wirbelströme induziert; wie in Fig. 1 durch Pfeile angedeutet, verlaufen die magnetischen Feldlinien vom Innenkern 4 über die Oberfläche der Welle 2, die Kernsegmente 5 bis 8 und wieder zum Innenkern 4.

Durch das Wicklungspaar 11, 12 mit den Jochsegmenten 5, 6 und das Wicklungspaar 13, 14 mit den Jochsegmenten 7, 8 sind zwei senkrecht aufeinanderstehende Messsysteme gebildet, durch die sich quasi eine Messbrückenanordnung ergibt.

Die in der Oberfläche der Welle 2 induzierten Wirbelströme beschränken den Feldlinienverlauf auf eine bestimmte Eindringtiefe in die Wellenoberfläche.

Wird die Welle 2 einem in der Pfeilrichtung Z wirkenden Drehmoment ausgesetzt und damit tordiert, so ergeben sich in ± 45° von der Achsrichtung Zug- und Schubspannungen, die mit einer Permeabilitätsänderung an der Oberfläche der Welle 2 einhergehen; in Richtung der Zugspannung (+ 45°) wird die Permeabilität grösser und in Richtung der Schubspannung entsprechend kleiner.

Durch die vergrösserte Permeabilität in Richtung der Zugspannung (+ 45°) wird in den Messwicklungen 11, 12 eine Spannung induziert, die grösser als die in den der Schubspannung (− 45°) zugeordneten Messwicklungen 13, 14 induzierte Spannung ist; da die Wicklungspaare 11, 12 und 13, 14 gegeneinander geschaltet sind, tritt an den Enden A, E beider Messwicklungssysteme eine Differenzspannung auf, die direkt dem wirkenden Drehmoment proportional ist.

Um etwaige Unsymmetrien des Schalenkernes zu berücksichtigen, beispielsweise unterschiedliche Abmessungen der Jochsegmente, ist der elektrische Abgleichkreis mit den Widerständen 15 bis 17 vorgesehen; die von den Messwicklungen 11, 12 und 13, 14 der beiden Messsysteme an den Leitungen M, E und M, A abgegebenen Messspannungen können mittels des Drehwiderstandes 17 auf gleichen Wert eingestellt werden.

Zur Drehmomentermittlung ist grundsätzlich nur ein einziger Messkopf erforderlich. Werden zwei Messköpfe verwendet, wie dies Fig. 1 zeigt, so wird ein etwaiger Wellenschlag die Anzeige nicht beeinflussen, da der Abstand zu einem Messkopf grösser und zum anderen Messkopf entsprechend kleiner wird, so dass Abstandsunabhängigkeit erreicht ist; gleiches gilt auch für etwa auftretende Biegespannungen.

Betrachtet man die Signalspannung als Funktion des Drehmomentes beispielsweise auf einem XY-Schreiber 20, so ist die Aufzeichnung bei kontinuierlich ansteigendem und wieder abfallendem Drehmoment mit einer Hysterese behaftet; dieser Effekt kann beseitigt werden, indem eine derart grosse Erregeramplitude für die Wicklung 9 gewählt wird, dass die Welle 2 bis in den Sättigungsbereich ummagnetisiert wird, wodurch die mechanische Hysterese beseitigt wird, und die vom Schreiber 20 bei ansteigendem und abfallendem Drehmoment aufgezeichneten Linien zusammenfallen. Anstelle einer entsprechend grossen Erregeramplitude kann mit der gleichen Erregerwicklung auch mit einer anderen Frequenz eine Ummagnetisierung bis in den Sättigungsbereich der Welle erfolgen.

Es kann auch eine separate wechselstromgespeiste Zylinderwicklung vorgesehen werden, die auf die Welle 2 bis in Nähe der Messköpfe 1, 1' gebracht ist, wobei das magnetische Wechselfeld dieser Wicklung als Streufluss am Ort der Messsonde eine Ummagnetisierung der Welle bis in den Sättigungsbereich hinein bewirkt.

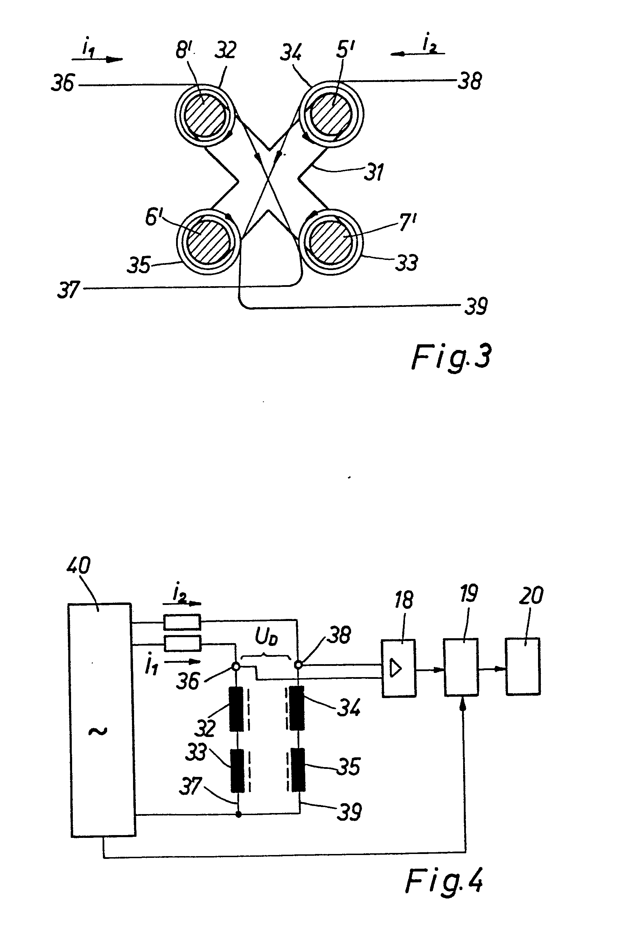

Beim Messkopf nach der Fig. 3 ist ein Ferritkern 31 in X-Form verwendet, welcher wieder vier Polstücke 5' bis 8', jedoch kein zentrales Polstück mehr aufweist; auf den Polstücken sind entsprechend der Ausbildung der Messwicklungen nach der Fig. 2 zwei Wicklungspaare 32, 33 und 34, 35 angeordnet, die Mess- und Erregerwicklungen zugleich sind.

Wie aus der Fig. 4 ersichtlich, ist eine zwei konstante und gleiche Ströme $i_1$, $i_2$ ausgebende Wechselstromquelle 40 vorgesehen, welche die beiden Wicklungspaare 32, 33 und 34, 35 speist; die Enden 37, 39 der Wicklungspaare sind zusammen an eine Klemme der Speisequelle 40 geführt, während die Enden 36 und 38 an je eine Klemme der Quelle 40 geführt sind.

Die Wicklungspaare 32, 33 und 34, 35 durchfliessen zwei gleichgrosse konstante Wechselströme $i_1$, $i_2$. Die an einer Welle wegen der Drehmomente auftretenden Permeabilitätsänderungen bewirken eine entsprechende Änderung des induktiven Widerstandes der Wicklungspaare 32, 33 und 34, 35 und damit unterschiedliche Spannungen an ihnen und die an den Enden 36, 38 auftretende Differenzspannung $U_D$ ist ein Mass für das Drehmoment.

**Patentansprüche**

1. Verfahren zur berührungslosen Messung statischer und dynamischer Drehmomente, bei dem auf der Prüflingsoberfläche ein magnetisches Wechselfeld erzeugt und die durch das auftretende Drehmoment hervorgerufene Permeabilitätsänderung der Prüflingsoberfläche mittels eines Magnetjochs mit vier Polstücken erfasst wird, dadurch gekennzeichnet, dass ein Magnetjoch (3) verwendet wird, bei dem die Polstücke paarweise symmetrisch zum Prüfling (2) angeordnet sind und bei dem jedem Polstück (5, 6, 7, 8) eine eigene Messwicklung (11, 12, 13, 14) zugeordnet ist und die Messwicklungen jeweils zweier diametral gegenüberliegender Polstücke (5, 6; 7, 8) bei gleichem Wicklungssinn in Reihe und die dadurch entstehenden Messwicklungspaare (11, 12; 13, 14) zu einer Messbrückenanordnung geschaltet sind, und dass der Prüfling (2) durch das magnetische Wechselfeld bis in seinen Sättigungsbereich ummagnetisiert wird.

2. Verfahren nach Anspruch 1, dadurch gekennzeichnet, dass ein Magnetjoch (3) verwendet wird, das einen Innenkern (4) mit einer Erregerwicklung (9) aufweist.

3. Verfahren nach Anspruch 1, dadurch gekennzeichnet, dass die Messwicklungen (32, 33, 34, 35) der Polstücke (5', 6', 7', 8') gleichzeitig als Erregerwicklungen verwendet werden.

## Claims

1. Method for the contactless measurement of static and dynamic torques, in which method an alternating magnetic field is produced on the test object surface and the change, that has been brought about by the occurring torque, in the permeability of the test object surface is detected by means of a magnet yoke with four pole pieces, characterised thereby, that a magnet yoke (3) is used, in which the pole pieces are arranged in pairs symmetrically with the test object (2) and in which an individual measurement winding (11, 12, 13, 14) is co-ordinated with each pole piece (5, 6, 7, 8) and the measurement windings of each two diametrally opposite pole pieces (5, 6; 7, 8) are connected in series in the same sense of winding and the measurement winding pairs (11, 12; 13, 14) arising thereby are connected to form a measurement bridge arrangement and that the test object (2) is reversed in magnetisation as far as into its saturation region by the alternating magnetic field.

2. Method according to claim 1, characterised thereby, that a magnet yoke (3) is used, which displays an internal core (4) with an excitation winding (9).

3. Method according to claim 1, characterised thereby, that the measurement windings (32, 33, 34, 35) of the pole pieces (5′, 6′, 7′, 8′) are used at the same time as excitation windings.

## Revendications

1. Procédé de mesure sans contact de couples de rotation statiques et dynamiques, selon lequel on crée un champ magnétique alternant à la surface d'un objet soumis à un couple et on détermine la variation de la perméabilité magnétique de la surface de l'objet, produite par le couple appliqué, au moyen d'une culasse d'aimant à quatre pièces polaires, caractérisé en ce que l'on utilise une culasse (3) dont les pièces polaires sont disposées symétriquement, par paire, par rapport à l'objet (2) et sur laquelle un enroulement de mesure individuel (11, 12, 13, 14) est prévu pour chaque pièce polaire (5, 6, 7, 8), que les enroulements de mesure de chaque fois deux pièces polaires (5, 6; 7, 8) situées diamétralement en face l'une de l'autre sont montés en série, le sens d'enroulement étant le même, que les paires d'enroulements de mesure (11, 12; 13, 14) ainsi formées sont connectées ensemble en un pont de mesure et que le champ magnétique alternant inverse chaque fois l'aimantation de l'objet (2) jusque dans son domaine de saturation.

2. Procédé selon la revendication 1, caractérisé en ce que l'on utilise une culasse (3) présentant un noyau intérieur (4) avec un enroulement d'excitation (9).

3. Procédé selon la revendication 1, caractérisé en ce que les enroulements de mesure (32, 33; 34, 35) des pièces polaires (5′, 6′, 7′, 8′) sont utilisés en même temps en tant qu'enroulements d'excitation.

0 046 517

Fig.1

Fig.2

Fig.3

Fig.4